# EUROPÄISCHE PATENTSCHRIFT

(11) **EP 3 492 777 B1**
(45) Veröffentlichungstag und Bekanntmachung des Hinweises auf die Patenterteilung: **09.12.2020**
(21) Anmeldenummer: 18205209.2
(22) Anmeldetag: 08.11.2018
(51) Int. Cl.: F16H 7/12

(54) **SPANNVORRICHTUNG FÜR EINEN ZUGMITTELTRIEB**
TENSIONING DEVICE FOR A TRACTION MECHANISM DRIVE
DISPOSITIF TENDEUR POUR UNE TRANSMISSION À MOYEN DE TRACTION

(30) Priorität: 29.11.2017 DE 102017128280
(43) Veröffentlichungstag der Anmeldung: 05.06.2019
(73) Patentinhaber: Muhr und Bender KG, 57439 Attendorn (DE)
(72) Erfinder: Svamberk, Michal, 267 63 Zajecov (CZ); Justra, Josef, 43401 Most (CZ); Pfeifer, Simon, 58840 Plettenberg (DE); Dolle, Roland, 57368 Lennestadt (DE)
(74) Vertreter: Neumann Müller Oberwalleney & Partner Patentanwälte

(56) Entgegenhaltungen:
- EP-A1- 3 023 670
- WO-A1-2014/090417
- DE-A1-102013 203 522

## Beschreibung

Die Erfindung betrifft eine Spannvorrichtung für einen Zugmitteltrieb, der ein endloses Zugmittel und zumindest zwei Zugmittelscheiben umfasst, von denen eine als Antrieb und eine als Abtrieb des Zugmitteltriebs fungieren kann. Derartige Zugmitteltriebe kommen insbesondere an Verbrennungsmotoren eines Kraftfahrzeugs zum Antreiben von Nebenaggregaten zum Einsatz, wobei eine erste Zugmittelscheibe auf der Kurbelwelle des Verbrennungsmotors sitzt und das Zugmittel antreibt. Weitere Zugmittelscheiben sind den Nebenaggregaten zugeordnet, wie beispielsweise Wasserpumpe, Lichtmaschine oder Klimaanlagenkompressor, und werden vom Zugmittelantrieb drehend angetrieben. Als Zugmittel werden in der Regel Riemen oder Ketten verwendet und die Zugmittelscheiben komplementär ausgestaltet.

Bei herkömmlichen Zugmitteltrieben sind die Nebenaggregate als Verbraucher ausgelegt, das heißt sie werden von der Zugmittelscheibe der Kurbelwelle über das Zugmittel angetrieben. Dabei ist zwischen der Kurbelwelle und dem in Umlaufrichtung des Zugmittels benachbarten Aggregat, in der Regel der Generator, das Lostrum ausgebildet. Um hier eine ausreichende Umschlingung des Zugmittels um die Zugmittelscheibe zu gewährleisten, wird das Zugmittel mittels eines Spannelements der Spannvorrichtung vorgespannt. Eine solche Spannvorrichtung ist Beispielsweise in der EP 2 573 423 B9 gezeigt.

Aus der WO 2014/090417 ist eine weitere Spanneinrichtung für einen Riementrieb mit einem Spannarm bekannt. Die Spanneinrichtung umfasst ein Gehäuseteil, das an einem Generatorgehäuse befestigt ist und einen Ringraum bildet. Ein ringförmiges Spannteil ist drehbar im Ringraum des Gehäuseteils gleitgelagert und wird mittels einer ebenen Spiralfeder mit Drehmoment beaufschlagt, sodass eine drehbar auf dem Spannteil gelagerte Spannrolle den Riemen vorspannt. Die Stirnseiten des Spannteils sind mit einem Polymer beschichtet und als Gleitlager ausgebildet. Die Polymerbeschichtung geht vom Gleitlager in zwei gegenüberliegende Dichtlippen über, die an den Stirninnenseiten des Ringraums anlaufen und die Gleitlager vor Umwelteinflüssen abdichten.

Aus der EP 3 023 670 B1 ist eine Spannvorrichtung für einen Riementrieb mit Starter-Generator bekannt. Die Spannvorrichtung weist ein Gehäuse auf, in dem zwei Spannarme um eine gemeinsame Schwenkachse schwenkbar gelagert sind. Die Spannarme sind mit Federmitteln gegeneinander abgestützt. Zwischen einer äußeren Axialscheibe des Grundkörpers und einem ersten Spannarm, dem ersten Spannarm und einem zweiten Spannarm sowie zwischen dem zweiten Spannarm und einem Flanschabschnitt sind jeweils zur Abdichtung der Lageranordnung Dichtungselemente angeordnet.

Der vorliegenden Erfindung liegt die Aufgabe zugrunde, eine Spannvorrichtung für einen Zugmitteltrieb vorzuschlagen, die einfach zu montieren ist und eine lange Lebensdauer insbesondere des Dichtungssystems und der Lageranordnung gewährleistet. Zur Lösung der Aufgabe wird eine Spannvorrichtung für einen Zugmitteltrieb vorgeschlagen, umfassend die Merkmale des Anspruchs 1.

Die erfindungsgemäße Spannvorrichtung weist den Vorteil auf, dass die beiden Dichtungselemente durch die Verbindung über die Verbindungsstege dauerhaft ortsfest relativ zum Trägerabschnitt positioniert sind. Eine Verschiebung der Dichtungselemente in radialer Richtung oder in Umfangsrichtung und insbesondere ein vollständiges Lösen der Dichtungsabschnitte von dem Trägerabschnitt wird verhindert, sodass sich eine erhöhte Lebensdauer des Dichtungssystems und durch die resultierende dauerhafte Dichtwirkung auch der Lageranordnung ergibt. Dazu kann in einer möglichen Ausführungsform die Anzahl der Bohrungen im Trägerabschnitt, in denen die Verbindungsstege angeordnet sind, größer 6, insbesondere größer 12, und/oder kleiner 24, insbesondere kleiner 18 sein.

Der Trägerabschnitt trägt die Dichtungen und kann an einem von dem Grundkörper oder dem Spannarm ausgebildet sein. Das erste Dichtungselement und das zweite Dichtungselement umfassen in einer Ausgestaltung jeweils einen geschlossenen Profilring und zumindest eine Dichtlippe. Die Dichtlippen, insbesondere zwei Dichtlippen, liegen an einer Gleitdichtfläche an, die dem anderen Teil von dem Spannarm oder dem Grundkörper zugeordnet ist, sodass ein Raum zwischen dem Grundkörper und dem Spannarm von einer Seite vor Umwelteinflüssen abgedichtet wird. Der Profilring verleiht dabei den Dichtungselementen in radialer Richtung und Umfangsrichtung Steifigkeit und dient dazu, das Dichtungselement mit einem zweiten Bauteil kraft-, form-, und/oder stoffschlüssig zu verbinden. Das Material aus denen die Dichtungsringe hergestellt sind, kann aus der Gruppe der Thermoplastischen Elastomere, insbesondere der Thermoplastischen Elastomere auf Urethanbasis, oder ein vulkanisierter Kautschukwerkstoff sein. Die Lagerelemente sind hingegen aus einem anderen Material als die Dichtungselemente hergestellt und können in einer Ausführungsform aus einem auf Polyamid oder Polyoxymethylen basierenden Kunststoff hergestellt sein.

In einer möglichen Ausführungsform ist der Profilring des ersten Dichtungselements mit dem Spannarm verbunden und die zumindest eine Dichtlippe des ersten Dichtungselements liegt am Grundkörper an, während auch der Profilring des zweiten Dichtungselements mit dem Spannarm verbunden ist und die zumindest eine Dichtlippe des zweiten Dichtungselements ebenfalls am Grundkörper anliegt. In einer weiteren möglichen Ausführungsform ist der Profilring des ersten Dichtungselements mit dem Grundkörper verbunden und die zumindest eine Dichtlippe des ersten Dichtungselements liegt am Spannarm an, während auch der Profilring des zweiten Dichtungselements mit dem Grundkörper verbunden ist und die zumindest eine Dichtlippe des zweiten Dichtungselements ebenfalls am Spannarm anliegt. In beiden zuvor beschriebenen Ausführungsform dichten das erste und das zweite Dichtungselement gemeinsam einen Raum ab, in dem die Lageranordnung der Spannvorrichtung angeordnet ist.

Zur Positionierung kann das erste Dichtungselement in einer ringförmigen ersten Nut und das zweite Dichtungselements in einer ringförmigen zweiten Nut angeordnet sein, wobei die erste Nut und die zweite Nut in entgegengesetzten Stützflächen des Trägerabschnitts vorgesehen sind. Des Weiteren können das erste Dichtungselement mit dem ersten Axiallager und das zweite Dichtungselement mit dem zweiten Axiallager jeweils formschlüssig verbunden sein. Hierzu können das erste Dichtungselement und das erste Axiallager sowie das zweite Dichtungselement und das zweite Axiallager jeweils eine gegenseitig komplementäre Eingriffsstruktur aufweisen.

Als weitere Abdichtung der Lageranordnung kann zusätzlich eine berührungslose Dichtung vorgesehen sein. Hierfür kann der Grundkörper einen ersten Versatz und der Spannarm einen zweiten Versatz aufweisen, wobei der erste Versatz und der zweite Versatz bezogen auf die Schwenkachse radial außen vom ersten Dichtungselement angeordnet und gleichgerichtet sind, sodass zwischen dem Grundkörper und dem Spannarm ein S-förmiger Spalt gebildet ist. Der Spalt wirkt als Filter für grobe Schmutzpartikel, die einen größeren Durchmesser als die Breite des Ringspalts aufweisen, und schützt die Dichtungselemente vor Beschädigungen durch diese Schmutzpartikel. Des Weiteren wirkt der Spalt als axiale Labyrinthdichtung und kann den Bauraum, der von Grundkörper und Spannarm gebildet wird und in dem sich die Dichtungs- und Lageranordnung befindet, vor dem Eintritt von Fluiden wie Spritzwasser schützen.

Zur schwenkbaren Lagerung des Spannarms kann zumindest eines von dem ersten Axiallager und dem zweiten Axiallager einteilig mit dem Radiallager ausgeführt sein und eine Lagereinheit bilden. Die Lagereinheit kann mit dem Grundkörper oder Spannarm verbunden sein, insbesondere kann die Lagereinheit an den Grundkörper oder den Spannarm angespritzt sein. Die Lagerelemente können sowohl an dem Trägerabschnitt angeordnet sein als auch an dem Teil von Grundkörper und Spannarm, das nicht den Trägerabschnitt aufweist. Eine Integration der einzelnen Lagerelemente in ein Bauteil reduziert während der Montage der Spannvorrichtung die Komplexität, sodass die Wahrscheinlichkeit von Montagefehlern verringert wird.

Die Federmittel können ein oder mehrere Federelemente umfassen, insbesondere in Form einer Biegefeder, wie beispielsweise eine Schrauben- und/oder Spiralfeder. Die Federmittel können auch als Federelement oder Feder bezeichnet werden. Bei wechselnder Belastung, wie sie auf die Spannvorrichtung einwirkt, führen die Federmittel in radialer Richtung bezüglich ihrer Längsachse Bewegungen aus. In den Bereichen in denen die Federmittel auf dem Grundköper bzw. dem Spannarm aufliegen kann es durch diese Bewegungen zu Verschleiß und struktureller Schwächung der Federmittel kommen. Um den resultierenden schädigenden Effekt zu minimieren, kann in einer möglichen Ausgestaltung vorgesehen sein, dass zumindest eines von Grundkörper und Spannarm in einem Bereich, in dem die Federmittel anliegen, zumindest ein Verschleißschutzelement aufweist, das insbesondere aus einem Kunststoff, beispielweise aus dem gleichen Material wie die Lagerelemente, hergestellt ist. Neben Kunststoffeinsätzen können auch Beschichtungen wie beispielsweise Hartstoffschichten, Kohlenstoffschichten oder passivierende Schichten aufgebracht werden.

Bevorzugte Ausführungsbeispiele werden nachstehend anhand der Zeichnungsfiguren erläutert. Hierin zeigt
- Figur 1: eine schematische Darstellung einer erfindungsgemäßen Spannvorrichtung in einem montierten Zustand in einem Zugmitteltrieb in einer perspektivischen Ansicht;
- Figur 2: eine erfindungsgemäße Spannvorrichtung in einer ersten Ausführungsform in perspektivischer Explosionsdarstellung;
- Figur 3: die Spannvorrichtung gemäß Figur 2 in einer Draufsicht;
- Figur 4: die Spannvorrichtung gemäß Figur 3 in einer Schnittansicht entlang der Schnittlinie IV - IV;
- Figur 5: die Spannvorrichtung gemäß Figur 4 in einem Querschnitt entlang der Schnittlinie V - V;
- Figur 6: eine Detailansicht der Einzelheit Y der Spannvorrichtung gemäß Figur 4;
- Figur 7: eine erfindungsgemäße Spannvorrichtung in einer zweiten Ausführungsform in perspektivischer Explosionsdarstellung;
- Figur 8: die Spannvorrichtung gemäß Figur 7 in einer Draufsicht;
- Figur 9: die Spannvorrichtung gemäß Figur 8 in einem Längsschnitt entlang der Schnittlinie IX - IX;
- Figur 10: die Spannvorrichtung gemäß Figur 9 in einem Querschnitt entsprechend der Schnittlinie X - X; und
- Figur 11: eine Detailansicht der Einzelheit Z der Spannvorrichtung gemäß Figur 9.

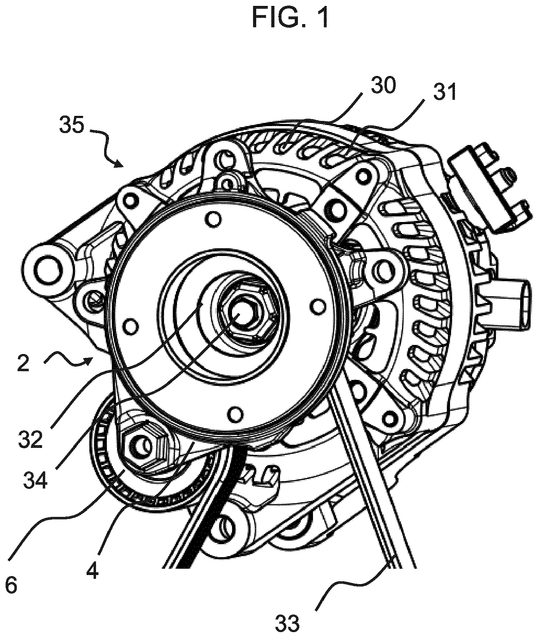

Figur 1 zeigt schematisch eine erfindungsgemäße Spannvorrichtung 2 für einen Zugmitteltrieb in der Ausgestaltung eines Riementriebes im montierten Zustand an einem Aggregat 30. Dabei bilden die Spannvorrichtung 2 und das Aggregat 30 eine Aggregatanordnung 35. Das Aggregat 30 ist in der dargestellten Form als Lichtmaschine ausgeführt, die ein Gehäuse 31 aufweist, das an einem nicht dargestellten Motorblock befestigt werden kann. Es versteht sich jedoch, dass das Aggregat 30 auch jede andere Arbeitsmaschine sein kann, die Teil des Zugmitteltriebes ist, beispielsweise eine Pumpe. Die Spannvorrichtung 2 ist stirnseitig an dem Gehäuse 31 des Aggregats 30 befestigt. Eine Riemenscheibe 32 ist erkennbar, die über eine Schraubverbindung mit einer Antriebswelle 34 des Aggregats 30 fest verbunden ist. Ein Riemen 33 umschlingt die Riemenscheibe 32 und eine Spannrolle 6, die drehbar auf einem Spannarm 4 gelagert ist. Der Riemen 33 wird durch die Spannrolle 6 vorgespannt.

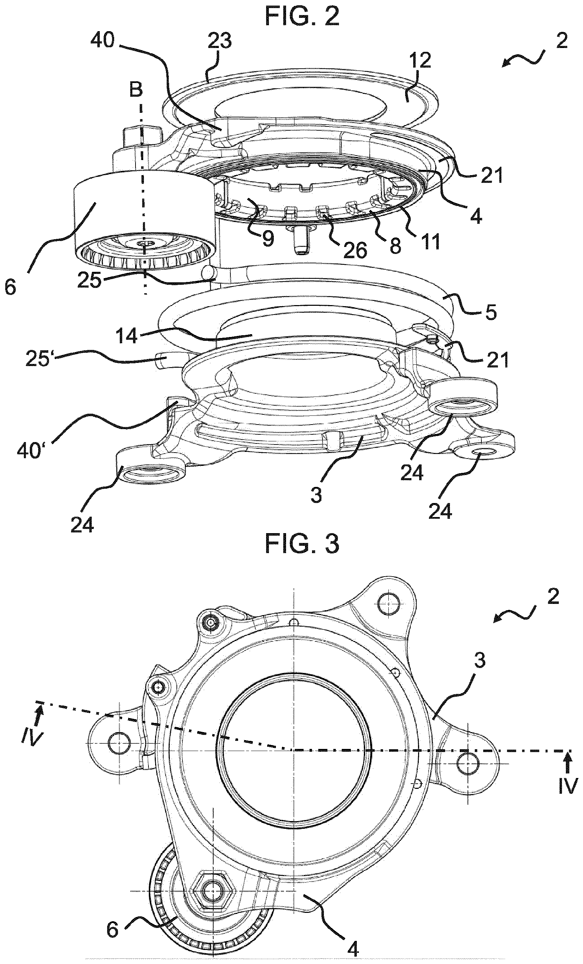

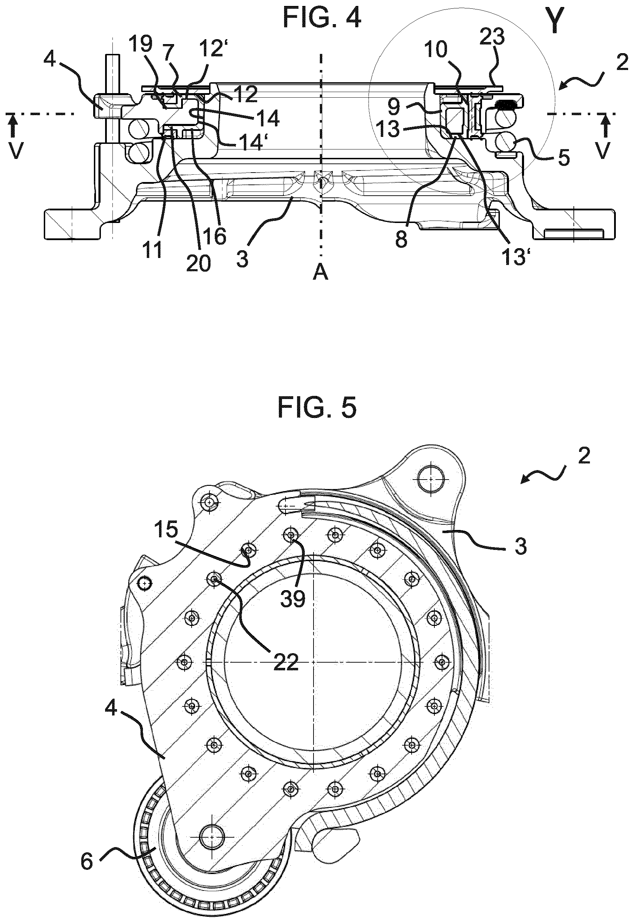

Die Figuren 2 bis 6, welche im Folgenden gemeinsam beschrieben werden, zeigen eine erfindungsgemäße Spannvorrichtung 2 in einer ersten Ausführungsform. Die Spannvorrichtung umfasst einen Grundkörper 3, der mit dem Gehäuse 31 des Aggregats 30 verbunden werden kann, einen Spannarm 4, der um eine Schwenkachse A relativ zum Grundkörper 3 schwenkbar gelagert und über Federmittel 5 an dem Grundkörper 3 federnd abgestützt ist. Die Federmittel 5 sind vorliegend als Schraubenfeder gestaltet, wobei es sich versteht, dass auch beliebige andere Federelemente verwendbar sind, wie eine Spiralfeder oder Bügelfeder. Die schwenkbare Lagerung des Spannarms 4 erfolgt mittels eines ersten Axiallagers 7, das den Spannarm 4 in eine erste axiale Richtung abstützt, eines zweiten Axiallagers 8, das den Spannarm 4 in eine zweite axiale Richtung abstützt und eines Radiallagers 9. Das erste Axiallager 7, das zweite Axiallager 8 und das Radiallager 9 sind in der dargestellten Ausführungsform als einteilige Lagereinheit 16 ausgeführt und an einen Trägerabschnitt 41 des Spannarms 4 angespritzt. Zum Schutz der Lagereinheit 16 vor Umwelteinflüssen sind hierzu radial außenliegend auf dem Trägerabschnitt 41 ein erstes Dichtungselement 10 und ein zweites Dichtungselement 11 angeordnet. Das erste und das zweite Dichtungselement 10 ,11 sind ebenfalls direkt an den Spannarm 4 angespritzt. Auf dem Spannarm 4 ist die Spannrolle 6 drehbar um eine Drehachse B gelagert, die parallel zur Schwenkachse A ist.

Der Grundkörper 3 umfasst drei radial nach außen vorstehende Anschlussflansche 24 mit Bohrungen, durch die Verbindungselemente zur Befestigung an dem Aggregat 30 durchgeführt werden können, einen Aufnahmeabschnitt 36 und eine Axialscheibe 23. Die Axialscheibe 23 ist fest mit dem Aufnahmeabschnitt 36 verbunden. Dies erfolgt durch das Umbördeln eines Hülsenansatzes 37 des Aufnahmeabschnitts 36 nach der Montage des Federelements 5, des Spannarms 4 mit der hiermit verbundenen Lagereinheit 16 und der Dichtungselemente 10, 11, und der Axialscheibe 23. Es sind auch Ausführungen denkbar, bei denen die Axialscheibe über eine Verschraubung oder durch einen Presssitz mit dem Aufnahmeabschnitt 36 verbunden ist. In der dargestellten Ausführungsform weist der Grundkörper 3 an der Axialscheibe 23 eine erste Stützfläche 12 und an dem Aufnahmeabschnitt 36 eine zweite Stützfläche 13 sowie eine Radialanlagefläche 14 auf, die zusammen einen umlaufenden, weitgehenden C-förmigen Querschnitt bilden und durch den ein nach außen offener, kreisringförmiger Bauraum teilweise begrenzt wird, in dem der Spannarm 4 angeordnet ist.

Das Federelement 5 stützt sich mit einem Federende 25 auf der Seite des Spannarms 4 an einer Anlageschulter 40 und mit einem anderen Federende 25' auf der Seite des Grundkörpers 3 an einer Anlageschulter 40' ab. Durch Schwenken des Spannarms 4 relativ zum Grundkörper 3 wird das Federelement 5 vorgespannt. Das Federelement 5 beaufschlagt damit den Spannarm 4 mit einem die Schwenkbewegung rückstellendem Drehmoment. Die Spannvorrichtung 2 wird in einem Riementrieb in einem verschwenkten Zustand montiert, sodass das rückstellende Drehmoment als Vorspannkraft auf den Riemen 33 einwirkt.

Das erste Axiallager 7 ist zwischen einer ersten Stützfläche 12' des Spannarms 4 und der ersten Stützfläche 12 des Grundkörpers 3 angeordnet. Das zweite Axiallager 8 ist zwischen einer zweiten Stützfläche 13' des Spannarms 4 und der zweiten Stützfläche 13 des Grundkörpers 3 angeordnet. Das Radiallager 9 ist zwischen einer Radialanlagefläche 14' des Spannarms 4 und einer Radialanlagefläche 14 des Grundkörpers 3 angeordnet. Die erste Stützfläche 12', die zweite Stützfläche 13' sowie die Radialanlagefläche 14' werden dabei teilweise von Ausnehmungen 26 unterbrochen, die zum Zweck der Materialeinsparung vorgesehen werden können. In der dargestellten Ausführung liegen die erste Stützfläche 12' und die zweite Stützfläche 13' jeweils in genau einer Ebene. Es ist auch vorstellbar, dass die beiden Flächen sich jeweils aus Teilbereichen zusammensetzen, die sich in verschiedenen parallelen Ebenen befinden und insbesondere durch Absätze voneinander getrennt sind.

Das erste Dichtungselement 10 und das zweite Dichtungselement 11 sind radial außenliegend von der Lagereinheit 16 angeordnet und umfassen jeweils einen Profilring 17, 17' und zwei Dichtlippen 18, 18'. Das erste Dichtungselement 10 sitzt mit dem Profilring 17 in einer ersten ringförmigen Nut 19, die in die erste Stützfläche 12' des Spannarms 4 eingearbeitet ist. Das zweite Dichtungselement 11 sitzt mit dem Profilring 17' in einer zweiten ringförmigen Nut 20, die in die zweite Stützfläche 13' des Spannarms 4 eingearbeitet ist. Die Dichtlippen 18 berühren die erste Stützfläche 12, die Dichtlippen 18' die zweite Stützfläche 13 und dichten somit gemeinsam den Raum ab, in dem die Lagereinheit 16 angeordnet ist.

Die einteilige Lagereinheit 16, bestehend aus einem auf Polyamid basierenden Kunststoff , wird zunächst an den Spannarm 4 angespritzt, wobei das erste Axiallager 7 und das zweite Axiallager 8 über Verbindungshohlzylinder 39 in Bohrungen 15 des Spannarms 4, die in axialer Richtung im Bereich des Trägerabschnitts 41 angeordnet sind, miteinander verbunden sind. Das erste Dichtungselement 10 und das zweite Dichtungselement 11, jeweils bestehend aus einem Thermoplastischen Elastomer, sind in einem weiteren Prozessschritt an bzw. auf das Halbfabrikat aus Spannarm 4 und Lagereinheit 16 gespritzt. Das erste Dichtungselement 10 und das zweite Dichtungselement 11 sind über Verbindungsstege 22 in den Bohrungen 15 des Spannarms 4 miteinander verbunden. In der dargestellten Ausführungsform sind die Verbindungstege 22 durch die Verbindungshohlzylinder 39 geführt. Es ist alternativ auch denkbar, dass die beiden Spritzprozesse so ausgeführt werden, dass in den Bohrungen 15 nur die Verbindungsstege 22 aufgenommen werden. Die dargestellte Ausführungsform umfasst achtzehn Bohrungen 15, die gleichmäßig auf einem Umfang verteilt im Trägerabschnitt 41 des Spannarms 4 angeordnet sind und jeweils einen Verbindungshohlzylinder 39 und einen Verbindungssteg 22 aufnehmen. Es versteht sich, dass auch eine hiervon abweichende Zahl von Verbindungsstegen 22 verwendet werden kann.

Eine zusätzliche dem ersten Dichtungselement 10 und dem zweiten Dichtungselement 11 vorgelagerte Abdichtung der Lagereinheit 16 wird über eine seitliche Abdeckung durch einen Ringspalt 29 erzielt. Der Ringspalt 29 wird durch einen ersten Versatz 27 der Axialscheibe 23 und einen zweiten Versatz 28 des Spannarms 4 gebildet und wirkt als Filter für grobe Schmutzpartikel und schützt vor allem die Dichtungselement 10, 11 vor Beschädigungen. Des Weiteren wirkt der Ringspalt 29 nach Art einer Labyrinthdichtung, die das Eintreten von Fluiden, beispielsweise Spritzwasser, in den Bauraum, in dem Dichtungselemente 10, 11 und die Lagereinheit 16 angeordnet sind, einschränken kann.

Als Schutz des Federelements 5 vor Verschleiß auf Grund von Relativbewegungen gegenüber dem Grundkörper 3 und dem Spannarm 4 sind in den Kontaktbereichen an Grundkörper 3 und dem Spannarm 4 Verschleißschutzelemente 21 angeordnet. Die Verschleißschutzelemente 21 sind als Kunststoffeinsätze ausgeführt, die bei fortschreitendem Verschleiß getauscht werden können. Die Verschleißschutzelemente 21 sind insbesondere aus dem gleichen Material wie die Lagereinheit 16 hergestellt.

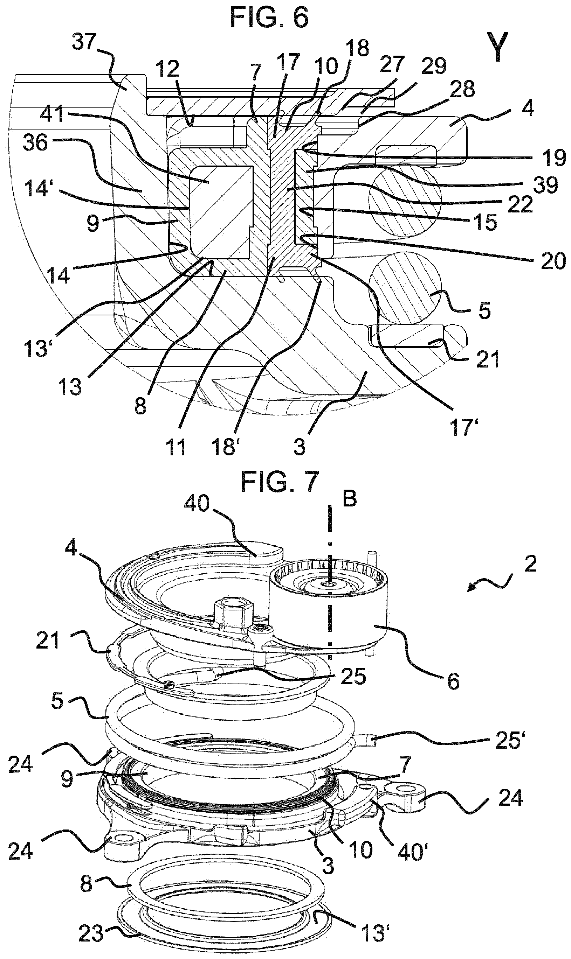

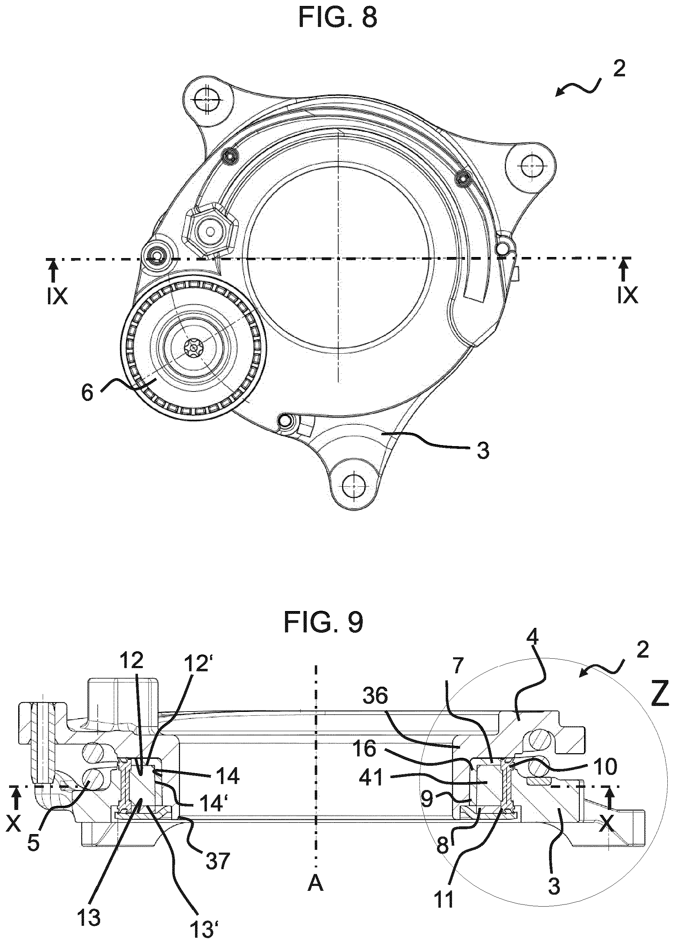

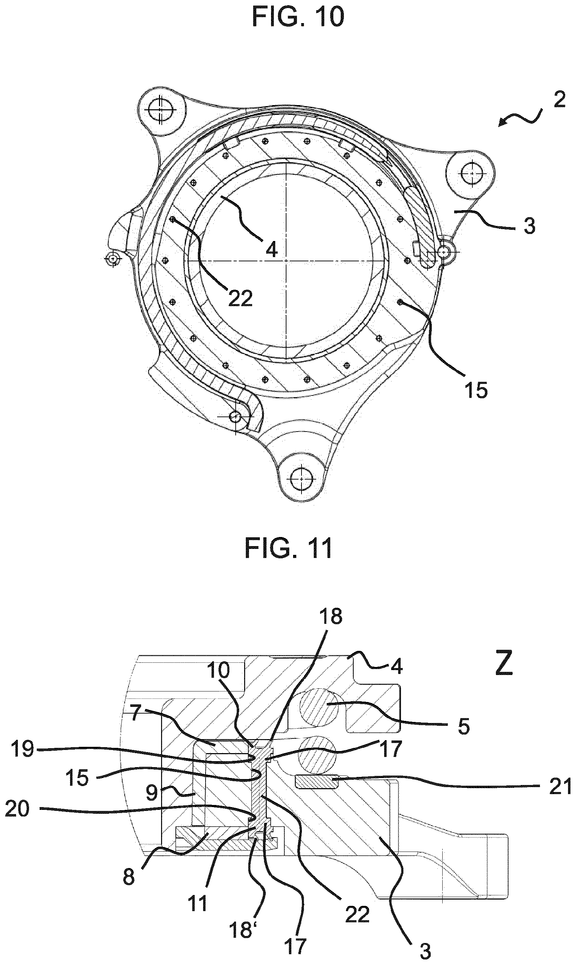

Die Figuren 7 bis 11, welche im Folgenden gemeinsam beschrieben werden, zeigen eine erfindungsgemäße Spannvorrichtung 2 in einer zweiten Ausführungsform. Die Spannvorrichtung umfasst einen Grundkörper 3, der über drei Anschlussflansche 24 mittels Befestigungsmitteln mit dem Gehäuse 31 des Aggregats 30 verbunden werden kann, einen Spannarm 4, der um eine Schwenkachse A relativ zum Grundkörper 3 schwenkbar gelagert und über Federmittel 5 an dem Grundkörper 3 federnd abgestützt ist. Die Federmittel 5 sind auch hier als Schraubenfeder ausgeführt, ohne hierauf eingeschränkt zu sein. Die schwenkbare Lagerung des Spannarms 4 erfolgt mittels eines ersten Axiallagers 7, das den Spannarm 4 in eine erste axiale Richtung abstützt, eines zweiten Axiallagers 8, das den Spannarm 4 in eine zweite axiale Richtung abstützt und eines Radiallagers 9. In der dargestellten Ausführungsform sind das erste Axiallager 7 und das Radiallager 9 als einteilige Lagereinheit 16 ausgeführt, der an einem Trägerabschnitt 41 des Grundkörpers 3 angespritzt ist. Das zweite Axiallager 8 ist eine separate Anlaufscheibe. Zum Schutz der Lagereinheit 16 und des zweiten Axiallagers 8 vor Umwelteinflüssen sind radial außenliegend auf dem Trägerabschnitt 41 ein erstes Dichtungselement 10 und ein zweites Dichtungselement 11 angeordnet. Die Dichtungselemente 10, 11 sind direkt an den Grundkörper 3 angespritzt.

Der Spannarm 4 weist eine Spannrolle 6, die drehbar um eine zur Schwenkachse A parallele Drehachse B gelagert ist, einen Aufnahmeabschnitt 36 und eine Axialscheibe 23 auf. Die Axialscheibe 23 ist fest mit dem Aufnahmeabschnitt 36 verbunden. Dies erfolgt durch das Umbördeln eines Hülsenansatzes 37 des Aufnahmeabschnitts 36 nach der Montage des Federelements 5, des Grundkörpers 4 mit der hiermit verbundenen Lagereinheit 16 und den Dichtungselementen 10, 11, dem zweiten Axiallager 8 und der Axialscheibe 23. In der dargestellten Ausführungsform weist der Spannarm 4 an dem Aufnahmeabschnitt 36 eine erste Stützfläche 12 sowie eine Radialanlagefläche 14 und an der Axialscheibe 23 eine zweite Stützfläche 13 auf, die zusammen einen in umlaufenden, weitgehenden C-förmigen Querschnitt bilden und durch den ein nach außen offener, kreisringförmigen Bauraum teilweise begrenzt wird, in dem der Grundkörper 3 angeordnet ist.

Das Federelement 5 stützt sich mit einem Federende 25 auf der Seite des Spannarms 4 an einer Anlageschulter 40 und mit einem anderen Federende 25' auf der Seite des Grundkörpers 3 an einer Anlageschulter 40' ab. Durch Schwenken des Spannarms 4 relativ zum Grundkörper 3 wird das Federelement 5 vorgespannt. Das Federelement 5 beaufschlagt damit den Spannarm 4 mit einem die Schwenkbewegung rückstellendem Drehmoment. Die Spannvorrichtung 2 wird in einem Riementrieb in einem verschwenkten Zustand montiert, sodass das rückstellende Drehmoment als Vorspannkraft auf den Riemen 33 einwirkt.

Das erste Axiallager 7 ist zwischen der ersten Stützfläche 12 des Spannarms 4 und einer ersten Stützfläche 12' des Grundkörpers 3 angeordnet. Das zweite Axiallager 8 ist zwischen der zweiten Stützfläche 13 des Spannarms 4 und einer zweiten Stützfläche 13' des Grundkörpers 3 angeordnet. Das Radiallager 9 ist zwischen der Radialanlagefläche 14 des Spannarms 4 und einer Radialanlagefläche 14' des Grundkörpers 3 angeordnet.

Das erste Dichtungselement 10 und das zweite Dichtungselement 11 sind radial außenliegend von der Lagereinheit 16 und von dem zweiten Axiallager 8 angeordnet und umfassen jeweils einen Profilring 17, 17' und zwei Dichtlippen 18, 18'. Das erste Dichtungselement 10 sitzt mit dem Profilring 17 in einer ersten ringförmigen Nut 19, die in die erste Stützfläche 12' des Grundkörpers 3 eingearbeitet ist. Das zweite Dichtungselement 11 sitzt mit dem Profilring 17' in einer zweiten ringförmigen Nut 20, die in die zweite Stützfläche 13' des Grundkörpers 3 eingearbeitet ist. Die Dichtlippen 18 berühren die erste Stützfläche 12 des Spannarms 4, die Dichtlippen 18' berühren die zweite Stützfläche 13 des Spannarms 4 und dichten somit gemeinsam den Raum ab, in dem die Lagereinheit 16 und das zweite Axiallager 8 angeordnet sind.

Das erste Dichtungselement 10 und das zweite Dichtungselement 11 sind in einem Prozessschritt an bzw. auf das Halbfabrikat aus Grundkörper 3 und Lagereinheit 16 gespritzt. Das erste Dichtungselement 10 und das zweite Dichtungselement 11 sind über Verbindungsstege 22 in den Bohrungen 15 des Grundkörpers 3 miteinander verbunden. Die dargestellte Ausführungsform umfasst achtzehn Bohrungen 15, die gleichmäßig auf einem Umfang verteilt im Trägerabschnitt 41 des Grundkörpers 3 angeordnet sind. Es versteht sich, dass auch eine hiervon abweichende Zahl an Verbindungsstegen 22 verwendet werden kann.

Als Schutz des Federelements 5 vor Verschleiß auf Grund von Relativbewegungen gegenüber dem Grundkörper 3 und dem Spannarm 4 sind in den Kontaktbereichen an Grundkörper 3 und dem Spannarm 4 Verschleißschutzelemente 21 angeordnet. Die Verschleißschutzelemente 21 sind als Kunststoffeinsätze ausgeführt, die bei fortschreitendem Verschleiß getauscht werden können.

### Bezugszeichenliste

- 2: Spannvorrichtung
- 3: Grundkörper
- 4: Spannarm
- 5: Federmittel
- 6: Spannrolle
- 7: Erstes Axiallager
- 8: Zweites Axiallager
- 9: Radiallager
- 10: Erstes Dichtungselement
- 11: Zweites Dichtungselement
- 12, 12': Erste Stützfläche
- 13, 13': Zweite Stützfläche
- 14, 14': Radialanlagefläche
- 15: Bohrung
- 16: Lagereinheit
- 17, 17': Profilring
- 18, 18': Dichtlippe
- 19: Erste Nut
- 20: Zweite Nut
- 21: Verschleißschutzelement
- 22: Verbindungssteg
- 23: Axialscheibe
- 24: Anschlussflansch
- 25, 25': Federenden
- 26: Ausnehmungen
- 27: Erster Versatz
- 28: Zweiter Versatz
- 29: Ringspalt
- 30: Aggregat
- 31: Gehäuse
- 32: Riemenscheibe
- 33: Riemen/ Zugmittel
- 34: Antriebswelle
- 35: Aggregatanordnung
- 36: Aufnahmeabschnitt
- 37: Hülsenansatz
- 38:
- 39: Verbindungshohlzylinder
- 40, 40': Anlageschulter
- 41: Trägerabschnitt

- A: Schwenkachse
- B: Drehachse

## Patentansprüche

1. Spannvorrichtung (2) für einen Zugmitteltrieb, umfassend:
einen Grundkörper (3),
einen Spannarm (4), der mittels eines Radiallagers (9) relativ zum Grundkörper (3) um eine Schwenkachse (A) schwenkbar gelagert ist,
wobei eines von den Teilen Grundkörper und Spannarm (3, 4) einen ringförmigen Trägerabschnitt (41) aufweist, der gegenüber dem anderen der beiden Teile Spannarm und Grundkörper (4, 3) mittels eines ersten Axiallagers (7) in eine erste Richtung und mittels eines zweiten Axiallagers (8) in eine zweite Richtung axial abgestützt ist,
eine erstes Dichtungselement (10), das mit dem Trägerabschnitt (41) zum Abdichten des ersten Axiallagers (7) verbunden ist,
eine zweites Dichtungselement (11), das mit dem Trägerabschnitt (41) zum Abdichten des zweiten Axiallagers (8) verbunden ist,
wobei das erste und das zweite Axiallager (7, 8) aus einem anderen Material hergestellt sind, als das erste und das zweite Dichtungselement (10, 11),
eine Spannrolle (6), die an dem Spannarm (4) drehbar gelagert ist und zum Spannen des Zugmittels (33) dient,
**dadurch gekennzeichnet, dass** die Spannvorrichtung weiterhin Federmittel (5), über die der Spannarm (4) in Umfangsrichtung gegen den Grundkörper (3) abgestützt ist, umfasst und
dass das erste Dichtungselement (10) und das zweite Dichtungselement (11) mittels mehrerer Verbindungsstege (22), die sich durch Bohrungen (15) des Trägerabschnitts (41) hindurcherstrecken, miteinander verbunden sind.

2. Spannvorrichtung nach Anspruch 1,
**dadurch gekennzeichnet,**
**dass** das erste und das zweite Dichtungselement (10, 11) aus einem Material aus der Gruppe Thermoplastischer Elastomere, insbesondere der Thermoplastischen Elastomere auf Urethanbasis, oder aus einem vulkanisierten Kautschukwerkstoff hergestellt sind.

3. Spannvorrichtung nach Anspruch 1 oder 2,
**dadurch gekennzeichnet,**
**dass** das erste und das zweite Axiallager (7, 8) aus einem auf Polyamid oder Polyoxymethylen basierenden Kunststoff hergestellt sind.

4. Spannvorrichtung nach einem der Ansprüche 1 bis 3,
**dadurch gekennzeichnet,**
**dass** das erste Dichtungselement (10) mit dem ersten Axiallager (7) und das zweite Dichtungselement (11) mit dem zweiten Axiallager (8) jeweils formschlüssig verbunden sind.

5. Spannvorrichtung nach Anspruch 4,
**dadurch gekennzeichnet,**
**dass** das erste Dichtungselement (10) und das erste Axiallager (7) sowie das zweite Dichtungselement (11) und das zweite Axiallager (8) jeweils eine gegenseitig komplementäre Eingriffsstruktur aufweisen.

6. Spannvorrichtung nach einem der Ansprüche 1 bis 5,
**dadurch gekennzeichnet,**
**dass** zumindest eines von dem ersten Axiallager (7) und dem zweiten Axiallager (8) einteilig mit dem Radiallager (9) ausgeführt ist und eine Lagereinheit (16) bildet.

7. Spannvorrichtung nach Anspruch 6,
**dadurch gekennzeichnet,**
**dass** die Lagereinheit (16) mit dem Grundkörper (3) oder Spannarm (4) verbunden ist, insbesondere die Lagereinheit (16) an den Grundkörper (3) oder den Spannarm (4) angespritzt ist.

8. Spannvorrichtung nach einem der Ansprüche 1 bis 7,
**dadurch gekennzeichnet,**
**dass** das erste Dichtungselement (10) und das zweite Dichtungselement (11) jeweils einen geschlossenen Profilring (17, 17') und zumindest eine Dichtlippe (18, 18') umfassen.

9. Spannvorrichtung nach Anspruch 8,
**dadurch gekennzeichnet,**
**dass** der Profilring (17) des ersten Dichtungselements (10) mit dem Spannarm (4) verbunden ist und die zumindest eine Dichtlippe (18) des ersten Dichtungselements (10) am Grundkörper (3) anliegt und
**dass** der Profilring (17') des zweiten Dichtungselements (11) mit dem Spannarm (4) verbunden ist und die zumindest eine Dichtlippe (18') des zweiten Dichtungselements (11) am Grundkörper (3) anliegt. (Figuren 2 bis 6)

10. Spannvorrichtung nach Anspruch 8,
**dadurch gekennzeichnet,**
**dass** der Profilring (17) des ersten Dichtungselements (10) mit dem Grundkörper (3) verbunden ist und die zumindest eine Dichtlippe (18) des ersten Dichtungselements (10) am Spannarm (4) anliegt und
**dass** der Profilring (17') des zweiten Dichtungselements (11) mit dem Grundkörper (3) verbunden ist und die zumindest eine Dichtlippe (18') des zweiten Dichtungselements (11) am Spannarm (4) anliegt. (Figuren 7 bis 11)

11. Spannvorrichtung nach einem der Ansprüche 1 bis 10,
**dadurch gekennzeichnet,**
**dass** das erste Dichtungselement (10) in einer ringförmigen ersten Nut (19) und das zweite Dichtungselements (11) in einer ringförmigen zweiten Nut (20) angeordnet sind, wobei die erste Nut (19) und die zweite Nut (20) in entgegengesetzten Stützflächen (12',13') des Trägerabschnitts (41) vorgesehen sind.

12. Spannvorrichtung nach einem der Ansprüche 1 bis 11,
**dadurch gekennzeichnet,**
**dass** der Grundkörper (3) einen ersten Versatz (27) und der Spannarm (4) einen zweiten Versatz (28) aufweist,
wobei der erste Versatz (27) und der zweite Versatz (28) bezogen auf die Schwenkachse (A) radial außen vom ersten Dichtungselement (10) angeordnet und gleichgerichtet sind, sodass zwischen dem Grundkörper (3) und dem Spannarm (4) ein S-förmiger Ringspalt (29) gebildet ist.

13. Spannvorrichtung nach einem der Ansprüche 1 bis 12,
**dadurch gekennzeichnet,**
**dass** zumindest eines von dem Grundkörper (3) und dem Spannarm (4) in einem Bereich, in dem die Federmittel (5) anliegen, zumindest ein Verschleißschutzelement (21) aufweist, das insbesondere aus einem Kunststoff hergestellt ist.

14. Spannvorrichtung nach einem der Ansprüche 1 bis 13,
**dadurch gekennzeichnet,**
**dass** die Anzahl der Bohrungen (15) im Trägerabschnitt (41) größer 6, insbesondere größer 12, und/oder kleiner 24, insbesondere kleiner 18, ist.

## Claims

1. A tensioning device (2) for a traction drive, comprising:
a base body (3),
a tensioning arm (4) which is pivotably mounted about a pivot axis (A) relative to the base body (3) by a radial bearing (9),
wherein one of the base body and tensioning arm (3, 4) has an annular carrier portion (41) which is axially supported relative to the other one of the two parts tensioning arm and base body (4, 3) by a first axial bearing (7) in a first direction and by a second axial bearing (8) in a second direction,
a first sealing element (10) connected to said carrier portion (41) for sealing said first axial bearing (7),
a second sealing element (11) connected to said carrier portion (41) for sealing said second axial bearing (8),
wherein the first and second axial bearings (7, 8) are made of a different material than the first and second sealing elements (10, 11),
a tensioning roller (6) which is rotatably mounted on the tensioning arm (4) and serves to tension the traction means (33),
**characterised in that** the tensioning device (2) further comprises spring means (5) via which the tensioning arm (4) is supported in the circumferential direction against the base body (3), and
that the first sealing element (10) and the second sealing element (11) are connected to one another by a plurality of connecting webs (22) that extend through bores (15) in the carrier portion (41).

2. Tensioning device according to claim 1,
**characterised in**
**that** the first and the second sealing element (10, 11) are made of a material from the group of thermoplastics, in particular urethane-based thermoplastic elastomers, or from a vulcanized rubber material.

3. Tensioning device according to claim 1 or 2,
**characterised in**
**that** the first and second axial bearings (7, 8) are made of a plastic based on polyamide or polyoxymethylene.

4. Tensioning device according to any of claims 1 to 3,
**characterised in**
**that** the first sealing element (10) is form-fittingly connected to the first axial bearing (7), and the second sealing element (11) is form-fittingly connected to the second axial bearing (8).

5. Tensioning device according to claim 4,
**characterised in**
**that** the first sealing element (10) and the first axial bearing (7), as well as the second sealing element (11) and the second axial bearing (8) each have a mutually complementary engagement structure.

6. Tensioning device according to any of claims 1 to 5,
**characterised in**
**that** at least one of the first axial bearing (7) and the second axial bearing (8) is integral with the radial bearing (9) and forms a bearing unit (16).

7. Tensioning device according to claim 6,
**characterised in**
**that** the bearing unit (16) is connected to the base body (3) or tensioning arm (4), in particular the bearing unit (16) is injection-moulded onto the base body (3) or the tensioning arm (4).

8. Tensioning device according to any of claims 1 to 7,
**characterised in**
**that** the first sealing element (10) and the second sealing element (11) each have a closed profile ring (17, 17') and at least one sealing lip (18, 18').

9. Tensioning device according to claim 8,
**characterised in**
**that** the profile ring (17) of the first sealing element (10) is connected to the tensioning arm (4), and the at least one sealing lip (18) of the first sealing element (10) is in contact with the base body (3), and
**that** the profile ring (17') of the second sealing element (11) is connected to the tensioning arm (4), and the at least one sealing lip (18') of the second sealing element (11) is in contact with the base body (3). (Figures 2 to 6)

10. Tensioning device according to claim 8,
**characterised in that** the profile ring (17) of the first sealing element (10) is connected to the base body (3), and the at least one sealing lip (18) of the first sealing element (10) is in contact with the tensioning arm (4), and
that the profile ring (17') of the second sealing element (11) is connected to the base body (3), and the at least one sealing lip (18') of the second sealing element (11) is in contact with the tensioning arm (4). (Figures 7 to 11)

11. Tensioning device according to one of claims 1 to 10,
**characterised in**
**that** the first sealing element (10) is arranged in an annular first groove (19) and the second sealing element (11) is arranged in an annular second groove (20), the first groove (19) and the second groove (20) being provided in opposite supporting surfaces (12', 13') of the carrier portion (41).

12. Tensioning device according to any of claims 1 to 11,
**characterised in**
**that** the base body (3) has a first offset portion (27) and the tensioning arm (4) has a second offset portion (28),
wherein the first offset portion (27) and the second offset portion (28) are arranged radially externally of the first sealing element (10) with respect to the pivot axis (A) and are orientated in the same direction such that an S-shaped annular gap (29) is formed between the base body (3) and the tensioning arm (4).

13. Tensioning device according to one of claims 1 to 12,
**characterised in**
**that** at least one of the base body (3) and the tensioning arm (4) has, in a region that is engaged by the spring means (5), at least one wear protection element (21) that is produced in particular from a plastic material.

14. Tensioning device according to one of claims 1 to 13,
**characterised in**
**that** the number of bores (15) in the carrier portion (41) is greater than 6, in particular greater than 12, and/or smaller than 24, in particular smaller than 18.

## Revendications

1. Système tendeur (2) pour un entraînement par moyen de traction, comprenant :
un corps de base (3),
un bras tendeur (4), qui au moyen d'un roulement radial (9) est logé en étant susceptible de pivoter par rapport au corps de base (3) autour d'un axe de pivotement (A),
l'une des pièces corps de base et bras tendeur (3, 4) comportant un segment de support (41) annulaire, qui par rapport à l'autre des deux pièces bras tendeur et corps de base (4, 3) est axialement soutenu au moyen d'un premier roulement axial (7) dans une première direction et au moyen d'un deuxième roulement axial (8) dans une deuxième direction,
un premier élément d'étanchéité (10), qui est relié avec le segment de support (41) pour assurer l'étanchéité du premier roulement axial (7),
un deuxième élément d'étanchéité (11), qui est relié avec le segment de support (41) pour assurer l'étanchéité du deuxième roulement axial (8),
le premier et le deuxième roulements axiaux (7, 8) étant fabriqués en une autre matière que le premier et le deuxième éléments d'étanchéité (10, 11),
un galet tendeur (6), qui est logé en rotation sur le bras tendeur (4) et qui sert à tendre le moyen de traction (33),
**caractérisé en ce que** le système tendeur comprend par ailleurs des moyens à ressort (5), par l'intermédiaire desquels le bras tendeur (4) est soutenu en direction périphérique contre le corps de base (3), et
**en ce que** le premier élément d'étanchéité (10) et le deuxième élément d'étanchéité (11) sont reliés l'un à l'autre au moyen de plusieurs listels de liaison (22), qui s'étendent à travers des perçages (15) du segment de support (41).

2. Système tendeur selon la revendication 1,
**caractérisé en ce que**
le premier et le deuxième éléments d'étanchéité (10, 11) sont fabriqués dans une matière du groupe des élastomères thermoplastiques, notamment des élastomères thermoplastiques à base d'uréthane, ou en un matériau caoutchouteux vulcanisé.

3. Système tendeur selon la revendication 1 ou 2,
**caractérisé en ce que**
le premier et le deuxième roulements axiaux (7, 8) sont fabriqués en une matière plastique à base de polyamide ou de polyoxyméthylène.

4. Système tendeur selon l'une quelconque des revendications 1 à 3,
**caractérisé en ce que**
le premier élément d'étanchéité (10) est relié par complémentarité de forme avec le premier roulement axial (7) et le deuxième élément d'étanchéité (11) est relié par complémentarité de forme avec le deuxième roulement axial (8).

5. Système tendeur selon la revendication 4,
**caractérisé en ce que**
le premier élément d'étanchéité (10) et le premier roulement axial (7), ainsi que le deuxième élément d'étanchéité (11) et le deuxième roulement axial (8) comportent chacun une structure d'engagement réciproquement complémentaire.

6. Système tendeur selon l'une quelconque des revendications 1 à 5,
**caractérisé en ce qu'**
au moins l'un parmi le premier roulement axial (7) et le deuxième roulement axial (8) est réalisé en monobloc avec le roulement radial (9) et forme une unité de palier (16).

7. Système tendeur selon la revendication 6,
**caractérisé en ce que**
l'unité de palier (16) est reliée avec le corps de base (3) ou le bras tendeur (4), notamment l'unité de palier (16) est injectée sur le corps de base (3) ou sur le bras tendeur (4).

8. Système tendeur selon l'une quelconque des revendications 1 à 7,
**caractérisé en ce que**
le premier élément d'étanchéité (10) et le deuxième élément d'étanchéité (11) comprennent chacun une bague profilée (17, 17') fermée et au moins une lèvre d'étanchéité (18, 18').

9. Système tendeur selon la revendication 8,
**caractérisé en ce que**
la bague profilée (17) du premier élément d'étanchéité (10) est reliée avec le bras tendeur (4) et **en ce que** l'au moins une lèvre d'étanchéité (18) du premier élément d'étanchéité (10) est adjacente au corps de base (3), et
**en ce que** la bague profilée (17') du deuxième élément d'étanchéité (11) est reliée avec le bras tendeur (4) et **en ce que** l'au moins une lèvre d'étanchéité (18') du deuxième élément d'étanchéité (11) est adjacente au corps de base (3). (figures 2 à 6)

10. Système tendeur selon la revendication 8,
**caractérisé en ce que**
la bague profilée (17) du premier élément d'étanchéité (10) est reliée avec le corps de base (3) et **en ce que** l'au moins une lèvre d'étanchéité (18) du premier élément d'étanchéité (10) est adjacente au bras tendeur (4), et
**en ce que** la bague profilée (17') du deuxième élément d'étanchéité (11) est reliée avec le corps de base (3) et **en ce que** l'au moins une lèvre d'étanchéité (18') du deuxième élément d'étanchéité (11) est adjacente au bras tendeur (4). (figures 7 à 11)

11. Système tendeur selon l'une quelconque des revendications 1 à 10,
**caractérisé en ce que**
le premier élément d'étanchéité (10) est placé dans une première rainure (19) annulaire et le deuxième élément d'étanchéité (11) est placé dans une deuxième rainure (20) annulaire, la première rainure (19) et la deuxième rainure (20) étant prévues dans des surfaces d'appui (12',13') opposées du segment de support (41).

12. Système tendeur selon l'une quelconque des revendications 1 à 11,
**caractérisé en ce que**
le corps de base (3) comporte un premier décalage (27) et le bras tendeur (4) comporte un deuxième décalage (28),
en rapport à l'axe de pivotement (A), le premier décalage (27) et le deuxième décalage (28) étant placés radialement à l'extérieur du premier élément d'étanchéité (10) et étant orientés dans la même direction, de sorte qu'entre le corps de base (3) et le bras tendeur (4) soit formée une fente annulaire (29) en forme de S.

13. Système tendeur selon l'une quelconque des revendications 1 à 12,
**caractérisé en ce que**
dans une zone dans laquelle les moyens à ressort (5) sont adjacents, au moins l'un parmi le corps de base (3) et le bras tendeur (4) comporte un élément anti-usure (21) qui est fabriqué notamment en une matière plastique.

14. Système tendeur selon l'une quelconque des revendications 1 à 13,
**caractérisé en ce que**
le nombre des perçages (15) dans le segment de support (41) est supérieur à 6, notamment supérieur à 12, et/ou inférieur à 24, notamment inférieur à 18.
